# EUROPEAN PATENT SPECIFICATION

(11) **EP 3 486 827 B1**
(45) Date of publication and mention of the grant of the patent: **22.09.2021**
(21) Application number: 17001879.0
(22) Date of filing: 16.11.2017
(51) Int. Cl.: G06F 21/60, H04L 9/08, H04L 9/32, H04L 29/06, H04W 12/06, H04W 12/03, H04W 12/43

(54) **"WINDOW-OF-TIME" ENCRYPTION SESSION KEY TRANSFERENCE**
SCHLÜSSELÜBERTRAGUNG FÜR ZEITFENSTERVERSCHLÜSSELUNGSSITZUNG
TRANSFERT DE CLÉ DE SESSION DE CRYPTAGE PAR FENÊTRE TEMPORELLE

(43) Date of publication of application: 22.05.2019
(73) Proprietor: Giesecke+Devrient Mobile Security GmbH, 81677 München (DE)
(72) Inventor: Tea, Vui Huang, SE-12061 Stockholm (SE)

(56) References cited:
- US-A1- 2005 037 737
- US-A1- 2013 316 765
- Anonymous: "Temporary variable - Wikipedia", , 27 July 2016 (2016-07-27), XP055441544, Retrieved from the Internet: URL:https://web.archive.org/web/2016112606 1111/https://en.wikipedia.org/wiki/Tempora ry_variable [retrieved on 2018-01-17]
- Anonymous: "mobile - Is it possible to update/modify IMSI number of a SIM card? - Stack Overflow", , 5 June 2014 (2014-06-05), XP055441466, Retrieved from the Internet: URL:https://web.archive.org/web/2014092601 1131/https://stackoverflow.com/questions/2 3928109/is-it-possible-to-update-modify-im si-number-of-a-sim-card [retrieved on 2018-01-16]

## Description

The present invention is directed towards a method for enabling an electronic device to access secure information of a Subscriber Identity Module, SIM for short. According to the present invention it is possible to communicate with the Subscriber Identity Module even although an electronic device may not support specific interfaces. This especially applies in the domain of the so-called Internet of Things, IoT for short. The present invention is furthermore directed towards a respective communication protocol along with a system for enabling an electronic device to access security information. Moreover, a computer program product is suggested implementing the method steps, the communication instructions and furthermore being arranged to be operated by the system.

US 2005/0037737 A1 teaches a method of managing information from a telecommunication equipment unit, wherein a SIM toolkit application developed in the SIM card is executed, thereby enabling management of the information.

US 6,824,064 B2 teaches a smartcard operable to hold a plurality of applications, the smartcard comprising a scheduler program code, amongst others. US 2007/0207798 A1 teaches a method of testing subscriber identity module application toolkit functionality including sending proactive command data to the SIM card.

EP 1 496 714 A1 teaches an electronic switch for communication terminals, which have a module interface for connection with subscriber identification modules.

US 2013/316765 discloses a method for modifying the value of a data field in a chip card (e.g. SIM) via an applet residing on the chip card for testing purposes. The data field may be the IMSI. The applet is responsible for generating or obtaining the new value for the data field and overwriting the data field with this new value. Activation of the newly written values is carried out by rebooting the device. Further, the device can also be rebooted to restore the original operating conditions. The Wikipedia article on temporary variables (https://web.archive.org/web/20161126061111/https:// en.wikipedia.org/wiki/Temporary_variable) teaches a well-known computer programming technique of using temporary variables to swap the memory content of one variable to another.

The stackoverflow entry "Is it possible to update/modify IMSI number of a SIM card?" (https://web.archive.org/ web/20140926011131/https://stackoverflow.com/ questions/23928109/is-it-possible-to-update-modify-imsi-number-of-a-sim-card) discloses that a sequence of commands may be used to overwrite the EF_IMSI file in order to modify the IMSI number on a SIM card.

The application domain of the so-called Internet-of-Things, IoT for short, is commonly known. This involves usage of electronic devices, which typically comprise merely minimal hardware resources and can accordingly be provided in large quantities at a reasonable price. Furthermore, so-called Narrow Band IoT, NB-IoT for short, is commonly known, which is a Low Power Wide Area Network, LPWAN for short, radio technology standard developed to enable a wide range of devices and services to be connected using cellular telecommunication bands. The Narrow Band radio technology is specifically designed for the Internet-of-Things and is one of the specifications standardized by 3GPP.

Apart from the Internet-of-Things application domain mobile terminals, such as smartphones, are commonly known, which rely on a secure element, typically being provided by a SIM card. The SIM card provides specialized hardware and software instructions, which allow that sensitive data can be handled confidentially. The SIM card provides for instance user credentials and further sensitive data, which has to be properly protected.

Narrow Band Internet-of-Things and other LPWA IoT devices require a secure element for end-to-end encryption. The SIM is an ideal component. However, the IoT modules do not provide a mechanism to communicate with the SIM via APDU or STK. APDU is the abbreviation for Application Protocol Data Unit, which is a communication unit being arranged between a smartcard reader and a smartcard. Furthermore, STK describes a SIM application toolkit, which is a standard of the GSM system, which enables the subscriber identity module, SIM for short, to initiate actions, which can be used for various value-added services.

However, there is a problem regarding compatibility of IoT devices with the commonly known smartphone technology, especially respective communication protocols. The basic underlying problem is that IoT modules cannot communicate with the SIM via APDU or STK although IoT modules and devices require such a secure element.

This is of special advantage as, according to the state of the art, it is required to restore additional parts and components to be added to the IoT device as well as physical redesign of the IoT device, which leads to increased costs and complexity.

Accordingly, it is an object of the present invention to provide a method establishing compatibility between IoT devices, especially NB-IoT or LPWA IoT devices, with a so-called Subscriber Identity Module SIM. As commonly known concepts like APDU or STK cannot be used, it is an object of the present invention to provide an interface between an IoT device and the SIM such that restoring further components on the IoT device for providing a secure element can be avoided. Consequently, it is the object of the present invention to provide a method for enabling an electronic device, especially an IoT device, to access security information of a Subscriber Identity Module. It is furthermore an object of the present invention to provide a respective communication protocol along with a system for enabling an electronic device to access security information of a subscriber identity module. Moreover, a computer program product is to be suggested providing instructions implementing the suggested method.

The object is solved according to features of independent claim 1. Further advantages are provided by dependent claims.

Consequently, a method for enabling an electronic device to access security information of a Subscriber Identity Module as a secure element, wherein said electronic device avoids usage of an Application Protocol Data Unit or SIM toolkit is suggested, comprising the steps of duplicating a data item of a predefined data field of the Subscriber Identity Module for creating a backup of said data item, storing the security information in the predefined data field of the subcriber identity module, providing the security information to the electronic device and restoring the original data item by means of writing the duplicated data item back into the predefined data field.

The person skilled in the art recognizes that the above method steps may comprise substeps and may be performed iteratively and/or in a different order.

The electronic device according to the present invention is a mobile device, especially an IoT device. Preferably, the electronic device is a so-called NB-IoT device according to 3GPP. Furthermore, an electronic device may use the LTE physical layer and higher protocol layers. Such IoT devices are typically not arranged to support the Application Protocol Data Unit APDU or the SIM toolkit. Consequently, commonly known IoT devices are not able to directly communicate with SIM and as a result data encryption requires an additional secure element. In general, applications may access the SIM but it may be impossible for the IoT device as such to communicate with the SIM using APDU or STK. On the other hand side, IoT devices typically support so-called AT commands and accordingly, the present inventions makes use of such commands. Such AT commands are merely an example and it may furthermore be possible that the IoT device supports further read or write operations. As typically the IoT devices do not provide a mechanism to communicate with the SIM via APDU or STK, the present invention makes use of data fields being present on the SIM. Such data fields can easily be accessed and can be changed accordingly.

For doing so, the present invention suggests to duplicate a data item of a predefined data field of the Subscriber Identity Module. The duplication of a data item can be performed by storing the data of a predefined data field in a non-volatile memory. As a result a backup of said data item is created and consequently, the predefined data field can be overwritten. This is the case as the backup of the data item can be restored later on.

Furthermore, storing the security information in the predefined data field of the Subscriber Identity Module is suggested. Consequently, security information, such as an encryption key, can be stored on the SIM, which can then easily be accessed by the electronic device. The Subscriber Identity Module is inserted into the electronic device and may be removable or not. In the latter case the SIM is a so-called embedded SIM, eSIM for short. As the electronic device can access the Subcriber Identity Module it can read and write information although this cannot be performed using Application Protocol Data Unit or SIM toolkit. Consequently, the security information is written and read out by a generic instruction set, such as the so-called AT commands.

As the security information can easily be accessed using the Subscriber Identity Module they are provided to the electronic device, as the electronic device can typically access the SIM over a respective interface. In this way the usage of the Application Protocol Data Unit or the SIM toolkit is prevented.

Once the security information is provided the original data item can be restored using the backup data.

According to the present invention it is an advantage that semantics of pre-defined data field can be changed, thereby establishing means for communication with the electronic device. Consequently, a security information, such as an encryption key, can be generated and stored in a respective data field on the SIM. Hence, means which are typically applied for communication with the SIM are no longer necessary.

This provides the advantage that even an NB-IoT device not supporting protocols, which are typically applied in the application domain of smartcards, can transfer security information to and from the SIM. This is the case as not such protocols are used but rather native data fields being available on the SIM are used. By means of such security information further end-to-end communication can be encrypted and secured accordingly. However, this is not the case according to known methods.

Moreover, it is an advantage of the present invention to provide means to establish and interface allowing IoT devices to use advantages of smartcards, especially advantages of the subscriber identity module. Accordingly, the electronic device can easily communicate with the Subscriber Identity Module and the deployment of a further secure element is circumvented.

In the following an example is provided, where the electronic device is implemented as a so-called cellular Internet-of-Things device. Furthermore, the security information is provided by means of a so-called One-Time-Password, OTP for short. The method steps are implemented by so-called AT instructions or commands, which are initialized by AT. AT is an abbreviation for attention and is required to inform the communication partner that commands will arrive.

Each Cellular Internet of Things (CIoT) device contains a connectivity module. The connectivity module functions as the ME (Mobile Equipment) in a Cellular Internet of Things (CIoT) scenario. The solution creates a "window of time" for the IoT device to read the OTP from the SIM, akin to a solar eclipse.

The device reading the OTP from the SIM card may behave as follows: 'X' is a pre-defined time known to applet & device

| | |
|---|---|
| At X+0 seconds | The applet copies the original IMSI from EF-IMSI ('6F07') to a non-volatile storage area |
| At X+1 seconds | The applet generates a OTP, optionally prefixes it with a special marker & writes up to 8-bytes of OTP to EF-IMSI ('6F07') |
| At X+2 seconds | The device issues "AT+NRB" command to reboot device, after which the device will be off-line |
| At X+5 seconds | The device issues "AT+CIMI" command to read OTP disguised as an IMSI from the EF-IMSI ('6F07') file, use marker to ensure it is an OTP |
| At X+7 seconds | The applet restores original IMSI to EF-IMSI ('6F07') |
| At X+8 seconds | The device issues "AT+NRB" command to reboot device, after which the device will be on-line |

The provided example indicates several method steps, which are performed using relative time stamps. For instance at an offset of 0 seconds, the data item is duplicated. At an offset of 1 second, the security information is generated. At an offset of 2 seconds, electronic device is rebooted, as in the present example the data field is the so-called IMSI, also referred to as International Mobile Subscriber Identity. To enable such changes, reboot of the device is required according to an aspect of the present invention. At an offset of 5 seconds, the security information is provided by the so-called AT command "AT+CIMI". At an offset of 7 seconds, restoring the original data item is performed. At an offset of 8 seconds, the device is again rebooted for implementing the amendment to restore the original data item.

The device performing encryption of end-to-end secured uplink data may behave as follows:
1. Device reads the OTP from the SIM card;
2. Device uses the OTP as a session encryption key with an encryption algorithm to encrypt the uplink data;
3. Device sends the encrypted data to the server together with SIM card ID, e.g. ICCID;
4. Server generates OTP from SIM card ID, e.g. ICCID; and
5. Server uses the OTP as a session decryption key with an decryption algorithm to decrypt the uplink data.

The device performing decryption of end-to-end secured downlink data may behave as follows:
1. Device reads the OTP from the SIM card;
2. Server generates OTP from SIM card ID, e.g. ICCID;
3. Server uses the OTP as a session encryption key with an encryption algorithm to encrypt the downlink data;
4. Server sends the encrypted data to the device; and
5. Device uses the OTP as a session decryption key with an decryption algorithm to decrypt the downlink data

As set forth above, examples are likewise provided demonstrating the encryption of uplink data as well as the decryption of downlink data. This provides an application of the present method and especially demonstrates how the security information is used for securing data communication. It is of special advantage that the above-described method steps do not apply the so-called Application Protocol Data Unit APDU or a SIM toolkit. As can be seen from the above example, the communication data is securely transmitted without relying on concepts, which might not be established on an IoT device. Hence, data encryption can be performed thereby securing the communication channel even in case an IoT device is used. In this way the IoT device and the SIM are integrated for provision of an overall communication system, allowing the omission of a further secure element.

The method steps can be performed for instance under usage of the so-called AT commands. For instance, the CIMI command can be used for providing the security information to the electronic device. This is the case as typically IoT devices implement AT commands and accordingly, do not require Application Protocol Data Unit APDU or SIM toolkit. In this way information being provided by the SIM can be read out by the electronic device, namely the IoT device. In the following commands are introduced, which might be applied in the context of the present invention:
- AT+CIMI Request International Mobile Subscriber Identity: This command returns International Mobile Subscriber Identity (string without double quotes). Execution command causes the TA to return <IMSI>, which is intended to permit identification of the individual SIM card or active application in the UICC (GSM or USIM).

### Example:

AT+CIMI
460001357924680
- AT+NRB Neul Reboot: This command reboots the terminal. There is a short delay after issuing this command before the terminal reboots. No further AT commands will be processed. Please note that there is no final OK to signal that the command line has finished processing as AT command processing terminates with this command. No confirmation messages are expected until the reboot.

### Example:

AT+NRB
REBOOTING

The UICC refers to an Universal Integrated Circuit Card, which may likewise be named SIM. Furthermore, the present invention is directed to so-called embedded SIMs, also abbreviated as eUICC. The terminal is the electronic device.

In the following, a further example is provided indicating how the security information, namely the OTP, is provided by means of a predefined data field, namely the IMSI. For doing so, the security information is stored, amongst others, in the IMSI data field. A command for retrieving the IMSI data field is AT+CIMI. Using such AT commands, no SIM application toolkit is required. In the context of the present invention, a SIM toolkit consists of a set of commands programmed into the SIM, which define how the SIM should interact directly with the outside world and initiates commands independently of the handset and the network. In general, such a toolkit is a software being implemented on the SIM. According to the present invention the usage of such a SIM toolkit is circumvented as the electronic device, especially an IoT device, may not support such a software.

This following sequence shows the OTP value 755224 disguised as an IMSI:
AT+CIMI
   4600013579246800 // Real IMSI
AT+NRB
   REBOOTING
AT+CIMI
   1111755224111111 / / OTP (= security information) disguised as an IMSI, device off-line
AT+NRB
   REBOOTING
AT+CIMI
   4600013579246800 / / Real IMSI restored, device on-line

RFC 4226 HMAC-Based One-Time Password Algorithm (HOTP) Test Values are as follows, wherein the first claim value is used as security information:
1. 755224
2. 287082
3. 359152
4. 969429
5. 338314p

According to an aspect of the present invention, the security information is an encryption key, a session encryption key, a password and/or a One-Time-Password OTP. This provides the advantage that the communication between the electronic device and a further network component can be encrypted, especially the data to be send uplink or downlink can be encrypted. This can be performed using a secure element, namely the Subscriber Identity Module, without requiring any further secure elements. In this way the commonly known SIM can be applied in the context of IoT devices and can provide different kinds of security information.

According to a further aspect of the present invention, providing the security information is performed using AT commands. This provides the advantage that such a command set is typically implemented by electronic devices, even in case they are IoT devices. Using such specific commands, the SIM can be accessed and predefined data fields may be read out or be written according to such command. In general, an AT command is any command starting with AT meaning that an attention information message is sent to the communication partner. Such an AT command set may include variations of the so-called Hayes command set.

According to a further aspect of the present invention, providing the security information is performed using a Hayes command set. This provides the advantage that such a command set is typically supported by most electronic devices in the telecommunications domain, especially by NB-IoT devices. Consequently, the SIM can be accessed by means of such an instruction set without requiring further software components. The Hayes command set is commonly known and is for instance specified by ETSI TS 127 007. Especially, the Hayes command set shall be specified according to this 3GPP specification or related specifications.

According to a further aspect of the present invention, the predefined data field is the International Mobile Subscriber Identity data field, IMSI for short. This provides the advantage that such a data field can easily be read out by the electronic device and, as described above, can easily be handled and reset afterwards.

According to a further aspect of the present invention, providing the security information is performed using an AT+CIMI command. This provides the advantage that especially in case the IMSI data field is used, a well-established command can be performed for providing the security information to the electronic device.

According to a further aspect of the present invention, after performing the steps of storing the security information in the predefined data field and/or restoring the original data item, a reboot of the electronic device is performed. This provides the advantage that the amendments typically merely apply after the reboot of the electronic device and consequently, in case the IMSI field is changed a reboot can be performed afterwards. Again, this can be easily implemented with low technical effort.

According to a further aspect of the present invention, method steps are triggered by a relative time stamp. This provides the advantage that a specific number of seconds can be provided, as demonstrated above, for triggering method steps. Consequently, each actor is aware of what to do at a specific time. A relative time stamp may be implemented as an offset, for instance a specific number of seconds.

According to a further aspect of the present invention, the security information is used in at least one further method step to encrypt and/or decrypt communication data. This provides the advantage that the security information can be used as an encryption key which secures the data communication. As a result, a secure channel is provided and the respective decryption and encryption algorithm can use the security information being provided as set forth above.

According to a further aspect of the present invention, the security information is used in at least one further method step to secure uplink and/ or downlink data. This provides the advantage that the electronic device may communicate with further devices and accordingly both uplink and downlink data can be secured, for instance by encryption and/or decryption. In this way a secure end-to-end connection can be established.

According to a further aspect of the present invention, the electronic device communicates with a server. This provides the advantage that the electronic device can be used in the Internet-of-Things application scenario and may communicate with further electronic devices such as further IoT devices or respectively with a server.

According to a further aspect of the present invention, the security information is generated by an applet accessing the Subscriber Identity Module SIM. This provides the advantage that the security information can be generated using a secure element and furthermore a SIM toolkit can be used. In general, it might be the case that the subscriber identity module as such may access the SIM toolkit but the electronic device does not support the SIM toolkit and does, respectively, not support the Application Protocol Data Unit, either.

The object is also solved by a communication protocol being arranged in accordance with the suggested method. The communication protocol provides instructions, which trigger and/ or perform the suggested method steps for instance under usage of a network Such a network may be a Mobile Telecommunications Network. Consequently, the communication protocol triggers method steps of different components, which might be integrated in a single electronic device and/ or may likewise be distributed over a network.

The object is also solved by a system for enabling an electronic device to access security information of a subscriber identity module as a secure element, wherein said electronic device avoids usage of an Application Protocol Data Unit or SIM toolkit, comprising means being arranged to duplicate a data item of a predefined data field of the Subscriber Identity Module for creating a backup of said data item, means being arranged to store the security information in the predefined data field of the Subscriber Identity Module, means being arranged to provide the security information to the electronic device and means being arranged to restore the original data item by means of writing the duplicated data item back into the predefined data field.

The object is also solved by a computer program product being arranged to perform the suggested method steps when being executed on a computer. According to the present invention, the suggested method is able to operate the system and furthermore the system is able to execute the suggested method. Accordingly, method steps may be implemented as structural features of the system and furthermore structural features of the system may be provided by functionality of method steps.

In the following, further advantage of the present invention are demonstrated by means of the accompanying figure, which shows:

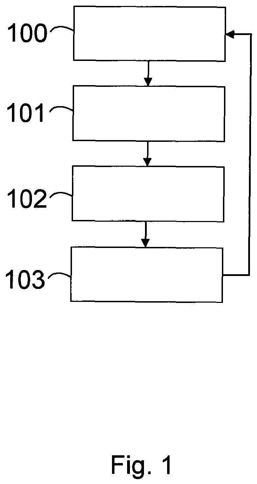

- Fig. 1:: a flow chart depicting a method for enabling an electronic device to access security information of a Subscriber Identity Module according to an aspect of the present invention.

Fig. 1 shows a flow chart of a method for enabling an electronic device to access security information of a Subscriber Identity Module as a secure element, wherein said electronic device avoids usage of an Application Protocol Data Unit or SIM toolkit, comprising the steps of duplicating 100 data item of a predefined data field of the Subscriber Identity Module for creating a backup of said data item, storing 101 the security information in the predefined data field of the Subscriber Identity Module, providing 102 the security information to the electronic device and restoring 103 the original data item by means of writing the duplicated data item back into the predefined data field. The skilled person appreciates that the above method steps may comprise substeps and may be performed iteratively and/ or in a different order. The suggested system is arranged in accordance with the suggested method and may comprise an electronic device and furthermore a SIM card, which may be removable or embedded into the electronic device. Preferably, the electronic device is a NB-IoT device.

## Claims

1. A method for enabling an electronic device to access security information of a Subscriber Identity Module acting as a secure element, wherein said electronic device avoids usage of an Application Protocol Data Unit or SIM Toolkit and the security information is used for data communication between the electronic device and a further network component, comprising the steps:
- duplicating (100) a data item of a predefined data field of the Subscriber Identity Module for creating a backup of said data item;
- storing (101) the security information in the predefined data field of the Subscriber Identity Module;
- providing (102) the security information to the electronic device; and
- restoring (103) the original data item by means of writing the duplicated data item back into the predefined data field.

2. The method according to claim 1, **characterized in that** the security information is an encryption key, a session encryption key, a password and/ or a one-time-password.

3. The method according to claim 1 or 2, **characterized in that** providing (102) the security information is performed using AT commands.

4. The method according to any one of the preceding claims, **characterized in that** providing (102) the security information is performed using a Hayes command set.

5. The method according to any one of the preceding claims, **characterized in that** the predefined data field is the International Mobile Subscriber Identity data field.

6. The method according to any one of the preceding claims, **characterized in that** providing (102) the security information is performed using an AT+CIMI command.

7. The method according to any one of the preceding claims, **characterized in that** after performing the steps of storing (101) the security information in the predefined data field and/ or restoring (103) the original data item, a reboot of the electronic device is performed.

8. The method according to any one of the preceding claims, **characterized in that** method steps are triggered by a relative time stamp, wherein the relative time stamp is an offset of a number of seconds based on a pre-defined point in time.

9. The method according to any one of the preceding claims, **characterized in that** the security information is used in at least one further method step to encrypt and/or decrypt communication data.

10. The method according to any one of the preceding claims, **characterized in that** the security information is used in at least one further method step to secure uplink and/ or downlink data.

11. The method according to any one of the preceding claims, **characterized in that** the electronic device communicates with a server.

12. The method according to any one of the preceding claims, **characterized in that** the security information is generated by an applet accessing the Subscriber Identity Module.

13. A system for enabling an electronic device to access security information of a Subscriber Identity Module acting as a secure element, wherein said electronic device avoids usage of an Application Protocol Data Unit or SIM Toolkit and the security information is used for data communication between the electronic device and a further network component, comprising:
- means being arranged to duplicate (100) a data item of a predefined data field of the Subscriber Identity Module for creating a backup of said data item;
- means being arranged to store (101) the security information in the predefined data field of the Subscriber Identity Module;
- means being arranged to provide (102) the security information to the electronic device; and
- means being arranged to restore (103) the original data item by means of writing the duplicated data item back into the predefined data field.

14. A computer program product being arranged to perform a method in accordance with any one of the preceding claims 1 to 12, when being executed on the system of claim 13.

## Patentansprüche

1. Verfahren, wonach einem elektronischen Gerät ermöglicht wird, auf Sicherheitsinformation eines Teilnehmeridentifikationsmoduls zuzugreifen, welches als Sicherheitselement agiert, wobei das elektronische Gerät eine Verwendung einer Application Protocol Data Unit oder eines SIM-Toolkit vermeidet und die Sicherheitsinformation zur Datenkommunikation zwischen dem elektronischen Gerät und einer weiteren Netzwerkkomponente verwendet wird, umfassend die Schritte:
- Duplizieren (100) eines Datenelements eines vorgegebenen Datenfelds des Teilnehmeridentifikationsmoduls zum Erzeugen einer Sicherheitskopie des Datenelements;
- Speichern (101) der Sicherheitsinformation in dem vorgegebenen Datenfeld des Teilnehmeridentifikationsmoduls;
- Bereitstellen (102) der Sicherheitsinformation gegenüber dem elektronischen Gerät; und
- Wiederherstellen (103) des originalen Datenelements mittels Zurückschreiben des duplizierten Datenelements in das vorgegebene Datenfeld.

2. Verfahren nach Anspruch 1, **dadurch gekennzeichnet, dass** die Sicherheitsinformation ein Verschlüsselungsschlüssel, ein Sitzungsverschlüsselungsschlüssel, ein Passwort und/ oder ein Einmalpasswort ist.

3. Verfahren nach Anspruch 1 oder 2, **dadurch gekennzeichnet, dass** das Bereitstellen (102) der Sicherheitsinformation unter Verwendung von AT-Kommandos durchgeführt wird.

4. Verfahren nach einem der vorhergehenden Ansprüche, **dadurch gekennzeichnet, dass** das Bereitstellen (102) der Sicherheitsinformation unter Verwendung eines Hayes-Kommandosatzes durchgeführt wird.

5. Verfahren nach einem der vorhergehenden Ansprüche, **dadurch gekennzeichnet, dass** das vorgegebene Datenfeld das International Mobile Subscriber Identity Datenfeld ist.

6. Verfahren nach einem der vorhergehenden Ansprüche, **dadurch gekennzeichnet, dass** das Bereitstellen (102) der Sicherheitsinformation unter Verwendung eines AT+CIMI-Kommandos durchgeführt wird.

7. Verfahren nach einem der vorhergehenden Ansprüche, **dadurch gekennzeichnet, dass** nach Durchführen der Schritte des Speicherns (101) der Sicherheitsinformation in dem vorgegebenen Datenfeld und/oder des Wiederherstellens (103) des originalen Datenelements ein Neustart des elektronischen Geräts durchgeführt wird.

8. Verfahren nach einem der vorhergehenden Ansprüche, **dadurch gekennzeichnet, dass** die Verfahrensschritte durch einen relativen Zeitstempel ausgelöst werden, wobei der relative Zeitstempel ein Offset von einer Anzahl von Sekunden basierend auf einem vorgegebenen Zeitpunkt ist.

9. Verfahren nach einem der vorhergehenden Ansprüche, **dadurch gekennzeichnet, dass** die Sicherheitsinformation in wenigstens einem weiteren Verfahrensschritt zum Verschlüsseln und/ oder Entschlüsseln von Kommunikationsdaten verwendet wird.

10. Verfahren nach einem der vorhergehenden Ansprüche, **dadurch gekennzeichnet, dass** die Sicherheitsinformation in wenigstens einem weiteren Verfahrensschritt zum Sichern von Uplink- und/ oder Downlink-Daten verwendet wird.

11. Verfahren nach einem der vorhergehenden Ansprüche, **dadurch gekennzeichnet, dass** das elektronische Gerät mit einem Server kommuniziert.

12. Verfahren nach einem der vorhergehenden Ansprüche, **dadurch gekennzeichnet, dass** die Sicherheitsinformation durch ein Applet erzeugt wird, welches auf das Teilnehmeridentifikationsmodul zugreift.

13. System, womit einem elektronischen Gerät ermöglicht wird, auf Sicherheitsinformation eines Teilnehmeridentifikationsmoduls zuzugreifen, welches als Sicherheitselement agiert, wobei das elektronische Gerät eine Verwendung einer Application Protocol Data Unit oder eines SIM-Toolkit vermeidet und die Sicherheitsinformation zur Datenkommunikation zwischen dem elektronischen Gerät und einer weiteren Netzwerkkomponente verwendet wird, umfassend:
- Mittel, die eingerichtet sind, um ein Datenelement eines vorgegebenen Datenfelds des Teilnehmeridentifikationsmoduls zu duplizieren (100), um eine Sicherheitskopie des Datenelements zu erzeugen;
- Mittel, die eingerichtet sind, die Sicherheitsinformation in dem vorgegebenen Datenfeld des Teilnehmeridentifikationsmoduls zu speichern (101);
- Mittel, die eingerichtet sind, die Sicherheitsinformation des elektronischen Geräts bereitzustellen (102); und
- Mittel, die eingerichtet sind, das originale Datenelement wiederherzustellen (103) mittels Zurückschreibens des duplizierten Datenelements in das vorgegebene Datenfeld.

14. Computerprogrammprodukt, eingerichtet um ein Verfahren gemäß einem der vorhergehenden Ansprüche 1 bis 12 durchzuführen, wenn es auf einem Computer ausgeführt wird.

## Revendications

1. Procédé destiné à permettre à un dispositif électronique d'accéder à des informations de sécurité d'un module SIM (Subscriber Identity Module) agissant comme élément sécurisé, dans lequel ledit dispositif électronique évite l'utilisation d'une unité de données de protocole d'application (Application Protocol Data Unit APDU) ou d'une boîte à outils SIM, et les informations de sécurité sont utilisées pour une communication de données entre le dispositif électronique et un composant de réseau supplémentaire, comprenant les étapes suivantes :
- dupliquer (100) un élément de données d'un champ de données prédéfini du module SIM pour créer une sauvegarde dudit élément de données ;
- stocker (101) les informations de sécurité dans le champ de données prédéfini du module SIM ;
- fournir (102) les informations de sécurité au dispositif électronique, et
- restaurer (103) l'élément de données d'origine par le biais d'une écriture de l'élément de données dupliqué dans le champ de données prédéfini.

2. Procédé selon la revendication 1, **caractérisé en ce que** les informations de sécurité sont une clé de chiffrement, une clé de chiffrement de session, un mot de passe, et/ ou un mot de passe à usage unique.

3. Procédé selon la revendication 1 ou 2, **caractérisé en ce que** l'étape pour fournir (102) les informations de sécurité est réalisée à l'aide de commandes AT.

4. Procédé selon l'une quelconque des revendications précédentes, **caractérisé en ce que** l'étape pour fournir (102) les informations de sécurité est réalisée à l'aide d'un jeu de commandes Hayes.

5. Procédé selon l'une quelconque des revendications précédentes, **caractérisé en ce que** le champ de données prédéfini est le champ de données d'identité internationale d'abonné mobile (International Mobile Subscriber Identity, IMSI).

6. Procédé selon l'une quelconque des revendications précédentes, **caractérisé en ce que** l'étape pour fournir (102) les informations de sécurité est réalisée à l'aide d'une commande AT + CIMI.

7. Procédé selon l'une quelconque des revendications précédentes, **caractérisé en ce qu'**après réalisation des étapes pour stocker (101) les informations de sécurité dans le champ de données prédéfini et/ ou restaurer (103) l'élément de données d'origine, un redémarrage du dispositif électronique est réalisé.

8. Procédé selon l'une quelconque des revendications précédentes, **caractérisé en ce que** les étapes de procédé sont déclenchées par une estampille temporelle relative, dans lequel l'estampille temporelle relative est un décalage d'un nombre de secondes sur la base d'un temps X prédéfini.

9. Procédé selon l'une quelconque des revendications précédentes, **caractérisé en ce que** les informations de sécurité sont utilisées lors d'au moins une étape de procédé supplémentaire pour chiffrer et/ ou déchiffrer des données de communication.

10. Procédé selon l'une quelconque des revendications précédentes, **caractérisé en ce que** les données de sécurité sont utilisées lors d'au moins une étape de procédé pour sécuriser des données de liaison montante et/ ou descendante.

11. Procédé selon l'une quelconque des revendications précédentes, **caractérisé en ce que** le dispositif électronique communique avec un serveur.

12. Procédé selon l'une quelconque des revendications précédentes, **caractérisé en ce que** les informations de sécurité sont générées par une applet accédant au module SIM.

13. Système destiné à permettre à un dispositif électronique d'accéder à des informations de sécurité d'un module SIM (Subscriber Identity Module) agissant comme élément sécurisé, dans lequel ledit dispositif électronique évite l'utilisation d'une unité de données de protocole d'application (Application Protocol Data Unit, APDU) ou d'une boîte à outils SIM, et les informations de sécurité sont utilisées pour une communication de données entre le dispositif électronique et un composant de réseau supplémentaire, comprenant :
- des moyens agencés pour dupliquer (100) un élément de données d'un champ de données prédéfini du module SIM pour créer une sauvegarde dudit élément de données ;
- des moyens agencés pour stocker (101) les informations de sécurité dans le champ de données prédéfini du module SIM ;
- des moyens agencés pour fournir (102) les informations de sécurité au dispositif électronique, et
- des moyens agencés pour restaurer (103) l'élément de données d'origine par le biais d'une écriture de l'élément de données dupliqué dans le champ de données prédéfini.

14. Produit de programme informatique agencé pour réaliser un procédé selon l'une quelconque des revendications précédentes 1 à 12, lorsqu'il est exécuté sur un ordinateur.
